# FASCICULE DE BREVET EUROPEEN

(11) **EP 0 713 179 B1**
(45) Date de publication et mention de la délivrance du brevet: **04.10.2001**
(21) Numéro de dépôt: 95402590.4
(22) Date de dépôt: 17.11.1995
(51) Int. Cl.: G06F 9/46

(54) **Protocole transactionnel, et système pour la mise en oeuvre de ce protocole**
Transaktionsprotokoll und Vorrichtung zur Erzeugung dieses Protokolls
Transaction protocol and system for implementing this protocol

(30) Priorité: 21.11.1994 FR 9413900
(43) Date de publication de la demande: 22.05.1996
(73) Titulaire: ALCATEL, 75008 Paris (FR)
(72) Inventeur: Paul Dubois Taine, Benoît, F-92340 Bourg la Reine (FR); Bouveret, Louis, F-75012 Paris (FR); Marine, Souheil, F-75013 Paris (FR)
(74) Mandataire: Sciaux, Edmond

(56) Documents cités:
- IEEE TRANSACTIONS ON SOFTWARE ENGINEERING, vol. 19, no. 10, Octobre 1993 NEW YORK US, pages 950-961, XP 000415060 CABRERA ET AL 'Implementing Atomicity in Two Systems: Techniques, Tradeoffs and Experience.'
- IBM TECHNICAL DISCLOSURE BULLETIN, vol. 36, no. 6B, Juin 1993 NEW YORK, US, pages 563-568, XP 000377483 ANONYMOUS 'Multigranularity Locking Divergence Control for Epsilon Serializability'

## Description

L'invention concerne un protocole de lecture et d'écriture de données mémorisées dans une mémoire volatile et éventuellement aussi dans une mémoire non volatile.

L'invention est applicable notamment dans un système de commande de réseau de télécommunication. Dans un tel système, des applications manipulent des variables qui sont semi-permanentes, c'est-à-dire dont les valeurs sont rarement modifiées. Les lectures sont donc beaucoup plus fréquentes que les écritures. D'autre part, les lectures doivent être réalisées dans des délais très courts. Il s'agit principalement de lire des tables contenant des variables relatives aux abonnés.

Un ensemble d'opération de lecture et/ou d'opérations d'écriture, portant sur des variables, demandées par une application dans une même requête, est appelé transaction. Lorsque la valeur d'une variable doit être modifiée, un protocole transactionnel classique consiste notamment à attribuer à une transaction donnée, pour un registre donné, un verrou d'écriture qui est un droit exclusif autorisant cette transaction, et elle seule, à écrire et à lire la valeur mémorisée dans ce registre, tant que ce verrou d'écriture existe. Les transactions lectrices doivent donc attendre lorsque la valeur de la variable qu'elles veulent lire est en cours de modification par une autre transaction. Cette attente se poursuit jusqu'à la fin de la transaction qui fait la modification. Les opérations d'écriture réduisent donc la performance des opérations de lecture.

Dans un système de gestion de réseau de télécommuniction, ce problème est généralement aggravé par le fait que la mémoire volatile est secourue au moyen d'une mémoire non volatile. Ces données sont mémorisées d'une part dans une mémoire volatile à semi-conducteurs pour un accès rapide, et d'autre part dans une mémoire non volatile mais ayant un temps d'accès plus long. La mémoire volatile est associée à un processeur. Cette mémoire volatile et ce processeur sont tous les deux sujets à des défaillances, et une défaillance de l'un entraîne une défaillance de l'autre. Lors d'une défaillance, toutes les données contenues dans la mémoire volatile sont perdues.

La mémoire non volatile est généralement constituée de disques miroirs associés à un contrôleur de disques assurant la sécurité des données mémorisées. Elle est accessible par tout programme exécuté sur le processeur, à travers un service d'accès à cette mémoire non volatile. Elle est nettement moins sujette à des défaillances que le couple processeur-mémoire volatile.

Une défaillance du couple processeur-mémoire volatile n'entraîne pas de défaillance de la mémoire non volatile. En outre, le service d'accès à la mémoire non volatile est disponible dès lors que le processeur fonctionne. Ce service a les propriétés suivantes :
- les requêtes en lecture ou en écriture sur une même donnée sont strictement sérialisées;
- toute requête fait l'objet d'une réponse par le service d'accès à la mémoire non volatile, lorsque cette requête a été exécutée;
- le service garantit qu'en cas de défaillance du processeur la requête est soit complètement inexécutée soit complètement exécutée.

Les données mémorisées dans les deux mémoires comportent des valeurs de variable qui peuvent être lues ou écrites. Chaque valeur est mémorisée dans un registre logique de la mémoire volatile et dans un registre logique de la mémoire non volatile. Entre les différentes variables et pour chaque variable, il est nécessaire de maintenir la cohérence entre la valeur située en mémoire volatile et celle située en mémoire non volatile.

Lorsqu'une application doit lire une donnée il suffit de la lire seulement dans la mémoire volatile. La mémoire non volatile n'est donc jamais accédée en lecture par les applications.

Par contre, lorsqu'une application veut modifier une donnée il est indispensable de la modifier dans la mémoire volatile et dans la mémoire non volatile, pour pouvoir restaurer correctement le contenu de la mémoire volatile après une défaillance. Il se pose alors un problème de séquencement des deux opérations d'écriture de la nouvelle valeur, par rapport à d'éventuelles opérations de lecture de la même variable dans la mémoire volatile, qui peuvent être demandées à peu près au même moment par d'autres applications.

A priori, il paraît indispensable d'interdire qu'une application puisse lire la nouvelle valeur dans la mémoire volatile avant que celle-ci ait été effectivement inscrite à la fois dans la mémoire volatile et dans la mémoire non volatile. En effet, si une défaillance survenait juste après l'écriture d'une nouvelle valeur dans la mémoire volatile, et avant qu'il y ait eu écriture de cette nouvelle donnée dans la mémoire non volatile, la restauration du contenu de la mémoire volatile conduirait à réinscrire l'ancienne valeur dans la mémoire volatile. Donc, si une lecture était permise dans la mémoire volatile juste après l'écriture de la nouvelle valeur dans celle-ci, et sans vérifier que l'écriture ait été réalisée aussi dans la mémoire non volatile, l'application lectrice aurait connaissance d'une valeur incohérente par rapport au contenu de la mémoire volatile, après défaillance et restauration.

Pour maintenir la cohérence entre les données inscrites dans ces deux mémoires, il paraît donc nécessaire de faire attendre toute application qui demande à lire la valeur d'une variable qui est en cours de modification par une autre application. Cependant cette attente est longue car une mémoire non volatile est généralement constituée de disques et a un temps d'accès beaucoup plus long que celui des mémoires volatiles constituées généralement de bascules à semi-conducteurs. Cette attente n'est pas acceptable dans des applications de télécommunication telles que le traitement des appels, où le délai de réaction est un critère de qualité primordial.

Les protocoles transactionnels utilisés antérieurement dans des systèmes de commande de réseau de télécommunication négligeaient ce problème d'attente. Ce dernier devait alors être traité par chaque application, engendrant ainsi un surcoût pour le développement et la mise au point de chaque application.

Le problème du maintien de la cohérence d'un ensemble de modification et/ou de lectures effectuées sur des données communes est rencontré dans le domaine des bases de données. Il a été résolu par un service dit de transactions.

Les nécessités de cohérence définies ci-dessus peuvent être satisfaites en offrant un service de transactions dites atomiques. Etant données deux transactions, on appelera variables critiques de cette paire de transactions, l'ensemble des variables qui peuvent être accédées simultanément par ces deux transactions. L'exécution de plusieurs transactions est dite atomique si :
- Pour toute paire de transactions, un accès aux variables critiques de cette paire de transactions, par l'une de ces deux transactions, est exécuté entièrement avant un accès à ces mêmes variables critiques par l'autre transaction.
- En cas de concurrence de plusieurs transactions ou en cas de défaillance du processeur, ou bien l'ensemble des opérations constituant cette transaction est exécuté, ou bien aucune des opérations n'est exécutée, pour chaque transaction.

Toute transaction se décompose en trois phases:
- une phase d'ouverture;
- une phase d'accès, pendant laquelle des opérations de lecture ou d'écriture sont requises ; et pendant laquelle des droits appelés verrous de lecture et verrous d'écriture sont attribués à cette transaction, pour le registre concerné;
- une phase de fermeture, pendant laquelle les lectures et les écritures requises sont exécutées, et les verrous correspondants sont relâchés.

Les verrous permettent d'interdire d'autres opérations qui compromettraient la cohérence des données. Un verrou de lecture, attribué à une transaction donnée, pour un registre donné, est un droit non exclusif attribué à cette transaction, autorisant cette transaction à lire la valeur mémorisée dans ce registre. Sa fonction essentielle est d'interdire l'attribution d'un verrou d'écriture à une autre transaction, pour ce même registre. Un verrou d'écriture, attribué à une transaction donnée pour un registre donné, est un droit exclusif attribué à cette transaction, autorisant cette transaction, et elle seule, à écrire une valeur dans ce registre. Un verrou de lecture ne peut être attribué pour un registre qu'à condition qu'aucun verrou d'écriture ne soit déjà attribué pour ce registre. Un verrou d'écriture ne peut être attribué pour un registre que si aucun verrou d'écriture, ni aucun verrou de lecture, ne soit déjà attribué pour ce registre.

L'exigence d'atomicité des transactions peut grever de manière importante la performance des lectures. En effet, dans le protocole transactionnel connu, décrit précédemment l'exclusion des lecteurs est effective dès l'accès à une donnée à modifier par une transaction, et jusqu'à la fermeture de celle-ci. Ce temps d'exclusion peut être long et n'est pas fixé par le système de gestion de la base de données mais par l'utilisateur. Pour certains types de données, telles que les données utilisées par le traitement d'appels dans un réseau de télécommunication, une telle indisponibilité en lecture serait inacceptable.

Le document IEEE TRANSACTIONS ON SOFTWARE ENGINEERING, vol.19, n°10, Octobre 1993, New York US, pages 950-961, CABRERA ET AL, « Implementing Atomicity in Two Systems : Techniques, Tradeoffs, and Experience. » décrit un protocole utilisant des verrous de lecture, des verrous d'écriture, et des verrous d'intention d'écriture, pour maintenir l'intégrité des données tout en conservant une bonne rapidité d'exécution des transactions. Pendant une transaction comportant l'écriture de la nouvelle valeur d'au moins une variable mémorisée dans un registre, un accès en lecture consiste, pour chaque variable, à :
- attribuer à cette transaction, pour le registre, un verrou dit de lecture interdisant l'exécution d'une écriture,
- puis lire le contenu de ce registre.

Un accès en écriture consiste, pour chaque variable, notamment à :
- attribuer à cette transaction, pour le registre, un verrou dit d'intention d'écriture, interdisant une écriture, dans ce registre, à toute transaction autre que cette transaction, mais autorisant une lecture;
- associer au registre un registre appelé journal, et y stocker la nouvelle valeur de la variable.

La fermeture de la transaction consiste essentiellement à :
- déterminer chaque registre auquel un verrou d'intention d'écriture a été attribué pour la transaction à fermer;
- relâcher tout verrou de lecture attribué à la transaction à fermer;
- puis, pour tout registre possédant un verrou d'intention d'écriture, pour la transaction à fermer, vérifier qu'il ne subsiste aucun verrou de lecture attribué à une autre transaction pour ce registre; et s'il subsiste au moins un verrou de lecture pendant une durée supérieure à une borne fixée, exécuter une procédure d'avortement de la transaction à fermer; et sinon transformer ce verrou d'intention d'écriture en verrou d'écriture ;
- puis, pour tout registre possédant un verrou d'écriture pour la transaction à fermer,
   -- transférer la nouvelle valeur de la variable, du journal au registre;
   -- et relâcher le verrou d'écriture attribué à la transaction à fermer, pour le registre;
- puis émettre un message "transaction réputée achevée", à destination d'une application ayant demandé la fermeture de la transaction.

La procédure d'avortement de la transaction à fermer, consiste pour tout registre possédant un verrou d'écriture ou d'intention d'écriture à:
- effacer le contenu de chaque journal stockant la valeur d'une variable modifiée par la transaction avortée;
- puis relâcher les verrous d'écriture et les verrous d'intention d'écriture attribués à la transaction avortée;
- puis émettre un message "transaction avortée" vers l'application ayant demandé la fermeture de la transaction.

Le protocole ainsi caractérisé permet des accès toujours à brefs délais, pour lire dans la mémoire, parce que l'écriture d'une nouvelle valeur dans la mémoire ne consiste à attribuer un véritable verrou d'écriture que lors de la fermeture de la transaction. De plus, le temps de détention de ce verrou est limité au temps (court) de copie du journal dans le registre. Ainsi les lectures ne sont pas retardées par les écritures.

La présente invention concerne des données mémorisées identiquement dans une mémoire volatile et dans une mémoire non volatile. Les données restent disponibles et cohérentes après toute défaillance passagère du processeur et de la mémoire volatile. Plus précisément, le but de l'invention est de définir quelles sont les données à mémoriser dans la mémoire non volatile et quelles sont les données à mémoriser dans la mémoire volatile; et de définir le protocole à exécuter pour les accès sur ces données, en vue d'une lecture, ou d'une écriture, ou pour restaurer le contenu de la mémoire volatile après une défaillance de celle-ci ou du processeur associé.

L'objet de l'invention est un protocole transactionnel portant sur des données mémorisées identiquement dans une mémoire non volatile et dans une mémoire volatile, dans lequel, pendant une transaction comportant une écriture de la nouvelle valeur d'au moins une variable mémorisée dans un premier registre de la mémoire volatile, et dans un second registre de la mémoire non volatile,
un accès en lecture consiste, pour chaque variable, à :
- attribuer à cette transaction, pour le premier registre, un verrou dit de lecture interdisant l'exécution d'une écriture,
- puis lire la valeur de ce registre ;
un accès en écriture consiste, pour chaque variable, notamment à :
- attribuer à cette transaction, pour le premier registre, un verrou dit d'intention d'écriture, interdisant une écriture, dans le premier registre, à toute transaction autre que la transaction à fermer, mais autorisant une lecture;
- associer au premier registre un registre appelé premier journal, et y stocker la nouvelle valeur de la variable;
la fermeture de ladite transaction consiste essentiellement, pour tout premier registre auquel un verrou d'intention d'écriture a été attribué pour la transaction à fermer, à :
- déterminer le second registre correspondant dans la mémoire non volatile ;
- attribuer à ce second registre ainsi déterminé un verrou d'écriture pour la transaction à fermer, ce verrou interdisant une lecture et une écriture à toute autre transaction ;
- associer au second registre ainsi déterminé un registre appelé second journal, et y stocker la nouvelle valeur de la variable ;
**caractérisé en ce que la fermeture de ladite transaction consiste ensuite à :**
- écrire dans une table dite des transactions, mémorisée dans la mémoire non volatile, l'identité de cette transaction;
- relâcher tout verrou de lecture attribué à la transaction à fermer;
- puis, pour tout premier registre possédant un verrou d'intention d'écriture, pour la transaction à fermer, vérifier qu'il ne subsiste aucun verrou de lecture attribué à une autre transaction pour ce registre, et s'il subsiste au moins un verrou de lecture pendant une durée supérieure à une borne fixée, exécuter une procédure d'avortement de la transaction à fermer; et sinon transformer ce verrou d'intention d'écriture en verrou d'écriture;
- puis, pour tout premier registre possédant un verrou d'écriture, pour la transaction à fermer,
   -- transférer la nouvelle valeur de la variable, du journal au registre;
   -- et relâcher le verrou d'écriture attribué à la transaction à fermer, pour le premier registre (Rim);
- puis émettre un message "transaction réputée achevée", à destination d'une application ayant demandé la fermeture de la transaction;
- puis inscrire dans la table un indicateur associé à l'identité de la transaction et indiquant que celle-ci est réputée achevée;
- puis, pour tout second registre possédant un verrou d'écriture, pour la transaction à fermer :
   -- transférer la nouvelle valeur de la variable, du second journal au second registre;
   -- puis relâcher le verrou d'écriture attribué à cette transaction pour le premier registre;
- et enfin effacer l'identité de la transaction, dans la table;
**en ce que la procédure d'avortement de la transaction à fermer, consiste pour tout premier registre, à :**
- effacer le contenu de chaque premier journal stockant la valeur d'une variable modifiée par la transaction avortée;
- puis relâcher les verrous d'intention d'écriture et les verrous d'écriture attribués à la transaction avortée, pour ce premier registre;
- effacer l'identité de la transaction avortée, dans la table;
- puis émettre un message "transaction avortée" vers l'application ayant demandé la fermeture de la transaction;
- puis effacer le contenu de chaque second journal stockant la valeur d'une variable modifiée par la transaction avortée;
- puis relâcher les verrous d'écriture attribués à la transaction avortée, pour des seconds registres;
**et en ce que, pour restaurer le contenu de la mémoire volatile après une défaillance de celle-ci, il consiste notamment à :**
- pour tout second registre de la mémoire non volatile, vérifier s'il subsiste un verrou d'écriture sur ce registre, et :
   -- s'il ne subsiste aucun verrou d'écriture, attribuer un verrou d'écriture au premier registre correspondant au second registre considéré, puis transférer le contenu de ce second registre dans ce premier registre et relâcher ce verrou d'écriture ;
   -- s'il subsiste un verrou d'écriture, déterminer si ce verrou appartient à une transaction dont l'identité se trouve dans la table des transactions; et :
      --- si oui, transférer le contenu du second journal dans le second registre, puis relâcher le verrou d'écriture, puis attribuer un verrou d'écriture au premier registre correspondant au second registre considéré, puis transférer le contenu de ce second registre dans ce premier registre, et relâcher ce dernier verrou d'écriture;
      --- sinon, effacer le contenu du second journal puis relâcher le verrou d'écriture;
- enfin, effacer toutes les identités de transaction présentes dans la table.

Le protocole ainsi caractérisé permet des accès pratiquement toujours à bref délais, pour la lecture dans la mémoire volatile, parce que l'écriture d'une nouvelle valeur dans la mémoire non volatile consiste à attribuer un verrou d'écriture au second registre, mais ne consiste pas à attribuer simultanément un verrou d'écriture au premier registre. C'est seulement un verrou d'intention d'écriture qui est attribué à ce premier registre. Ce verrou d'intention d'écriture est transformé en verrou d'écriture au moment de la fermeture de la transaction. Ce verrou d'écriture est maintenu seulement pendant le temps nécessaire au transfert du contenu du journal dans le registre de la mémoire volatile. Ce temps est court.

Contrairement à un classique verrou d'écriture, un verrou d'intention d'écriture n'interdit pas une lecture dans le premier registre. Cette lecture ne permet d'obtenir que l'ancienne valeur de la variable, mais elle a le mérite de satisfaire sans délais les applications qui demandent une lecture. Les applications qui demandent une lecture sont mises en attente très brièvement pendant la durée nécessaire à la mise à jour du premier registre, dans la mémoire volatile. Le temps d'accès à cette mémoire volatile reste donc très court malgré les mises à jour.

Du point de vue des applications, la transaction ayant pour objet de mettre à jour une variable est réputée achevée dès lors que la mémoire volatile a été mise à jour. La mémoire non volatile est mise à jour ensuite, en prenant tout le temps nécessaire pour accéder à cette mémoire, sans que les applications soient empêchées d'accéder à la nouvelle valeur de la variable dans la mémoire volatile.

Un problème de cohérence apparaîtrait si une défaillance de la mémoire volatile se produisait avant que la mémoire non volatile ait été mise à jour. Ce problème de cohérence n'apparaîtrait pas lors d'une lecture par une application, puisqu'une application ne lit jamais directement dans la mémoire non volatile. Mais par contre il apparaîtrait après la restauration de la mémoire volatile, si aucune précaution n'avait été prise pour restaurer le contenu de la mémoire volatile à partir du contenu de la mémoire non volatile.

La présence de l'identité d'une transaction dans la table des transactions selon l'invention a pour effet, lors d'une restauration du contenu de la mémoire volatile, d'interdire momentanément une restauration tant que la mise à jour de la mémoire non volatile n'est pas complètement réalisée, c'est-à-dire si au moins une nouvelle valeur est inscrite dans un second journal et n'a pas été transférée dans le second registre associé à ce second journal, avant l'instant de la défaillance. La table des transactions permet donc de prendre une décision correcte concernant le contenu des seconds journaux associés aux seconds registres.

Le contenu d'un second journal est transféré, dans le second registre qui lui est associé, si et seulement si l'identité de la transaction qui a inscrite une nouvelle valeur dans ce journal subsiste encore dans le tableau des transactions. Dans le cas contraire, le contenu de ce second journal peut être effacé et ignoré car l'absence de l'identité de cette transaction dans la table est une garantie que la décision d'avortement de cette transaction à été prise avant la défaillance. Ainsi la mise à jour de la mémoire non volatile peut être achevée, pour retrouver une cohérence avec les nouvelles valeurs, inscrites antérieurement dans la mémoire volatile, et déjà accessibles par les applications, avant la défaillance.

Le protocole selon l'invention permet aux applications de commande de réseau de télécommunication, entre autres applications, de profiter pleinement des avantages procurés par les protocoles transactionnels classiques des bases de données (propriétés d'atomicité, de sérialisibilité, d'isolation, et de durabilité), sans rencontrer de délais d'attente prohibitifs. Le seul cas où il y a un délai d'attente perceptible par les applications est le cas où la mémoire volatile est en cours de restauration à la suite d'une défaillance du processeur, c'est-à-dire pendant le transfert de données de la mémoire non volatile à la mémoire volatile. Ce cas est très peu fréquent car il est lié à la probabilité d'avoir une transaction en écriture, qui modifie un registre sauvegardé par un registre sur disque, au moment de la défaillance du processeur ; et les écritures sur ce type de registre sont peu fréquentes.

L'invention a aussi pour objet un système pour la mise en oeuvre du protocole selon l'invention.

L'invention sera mieux comprise et d'autres caractéristiques apparaîtront à l'aide de la description ci-dessous d'un exemple de mise en oeuvre de ce protocole, et à l'aide des figures l'illustrant :
- la figure 1 représente schématiquement un système informatique mettant en oeuvre le protocole selon l'invention;
- les figures 2a et 2b représentent un organigramme des opérations réalisées au cours d'une transaction dans un exemple de mise en oeuvre du protocole selon l'invention, dans cet exemple de système informatique;
- la figure 3 représente un organigramme des opérations réalisées au cours d'une procédure d'avortement d'une transaction;
- et la figure 4 représente un organigramme des opérations réalisées pour restaurer le contenu de la mémoire volatile, après une défaillance de cette mémoire ou du processeur qui lui est associé.

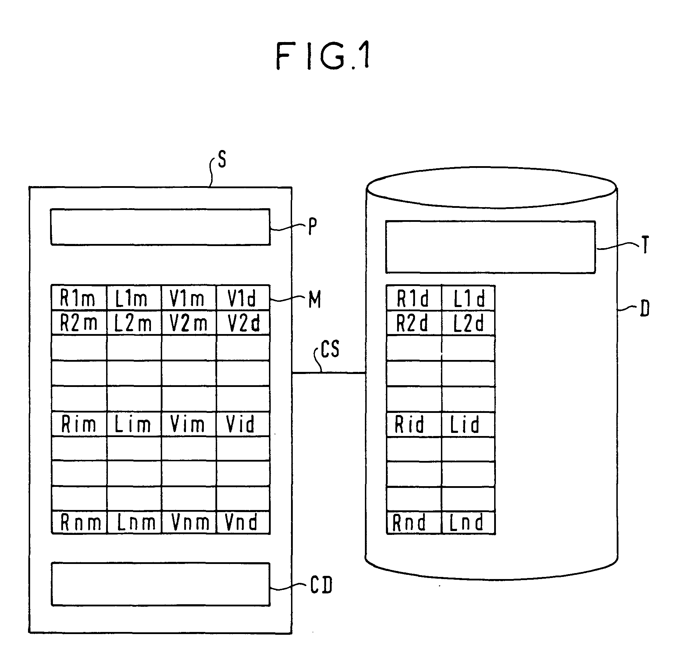

L'exemple de système informatique représenté sur la figure 1 ne comporte qu 'une station S et une mémoire non volatile D constituée d'un ensemble de disques, mais le protocole selon l'invention est applicable dans tout système de taille quelconque. La station S comporte un processeur P, un contrôleur de disques, CD, et une mémoire volatile M, qui est une mémoire à accès aléatoire, constituée par exemple de bascules à semiconducteurs.

Les liaisons à l'intérieur de la station S, ne sont pas représentées mais sont classiques. Le processeur P et la mémoire non volatile D sont reliés par un canal sécurisé de manière classique, CS. Toute défaillance du processeur P entraîne une défaillance de la mémoire volatile M, et donc la perte des données qu'elle contient. Par contre, une défaillance du processeur P n'entraîne pas de défaillance de la mémoire non volatile D qui est protégée notamment par le système classique de disques miroirs, et par le canal sécurisé CS.

Le processeur S exécute un logiciel mettant en oeuvre le protocole selon l'invention, et exécute divers logiciels d'application. Des applications utilisent, dans une transaction donnée, n variables V1, ..., Vi,..., Vn dont les valeurs sont respectivement mémorisées d'une part dans des registres logiques R1m, R2m, ..., Rim, ..., Rnm dans la mémoire volatile M, et d'autre part dans des registres R1d, ..., Rid, ..., Rnd, dans la mémoire non volatile D. Cette duplication permet de sauvegarder ces valeurs en cas de défaillance de la mémoire volatile M, afin de restaurer le contenu de cette mémoire volatile M. Un registre appelé journal, référencé respectivement L1m, L2m, ..., Lim, ..., Lnm, est associé respectivement aux registres R1m, ..., Rnm. Un registre, appelé registre de verrous, référencé respectivement V1m, V2m, ..., Vim, ..., Vnm est associé respectivement à chacun des registres R1m, ..., Rmm et est situé dans la mémoire volatile M. Le journal stocke une nouvelle valeur de la variable avant son écriture effective dans le registre associé.

De même, un registre journal, référencé respectivement L1d, ..., Lid, ..., Lnd, est associé respectivement à chacun des registres R1d, ..., Rnd de la mémoire non volatile D et est situé dans la mémoire non volatile D. Un registre de verrous, référencé respectivement V1d, ..., Vid, ..., Vnd, est associé respectivement à chacun des registres R1d, ..., Rnd, et est situé dans la mémoire volatile M. Dans cet exemple de système, la mémoire non volatile D contient aussi une table T dites des transactions, pour mémoriser des informations relatives aux transactions qui comportent des opérations d'écriture :
- l'identité de chaque transaction;
- et un indicateur d'issue de cette transaction.

Dans cet exemple, l'indicateur peut prendre deux valeurs :
- "issue inconnue" (la transaction peut avoir été avortée);
- "transaction réputée achevée" (mais en fait une défaillance a peut-être empêché son achèvement dans la mémoire non volatile).

Quand l'indicateur est effacé, la transaction est effectivement achevée dans la mémoire non volatile, ou bien la décision d'avortement a été prise et communiquée à l'application utilisateur.

Les applications accèdent en lecture ou en écriture aux registres de la mémoire volatile M sous le contrôle d'un logiciel mettant en oeuvre le protocole transactionnel selon l'invention. Ce protocole a certaines caractéristiques qui sont classiques dans un protocole transactionnel pour accéder à une base de données. Il consiste à :
- ouvrir une transaction à la demande d'une application, en attribuant une identité unique à cette transaction; cette identité permettant à cette application un accès en lecture ou en écriture dans les registres de la mémoire volatile M, grâce à l'attribution de verrous portant cette identité de transaction pour signifier que ces verrous sont attribués à cette transaction;
- fermer cette transaction lorsque l'application le demande, cette fermeture déclenchant la réalisation effective des lectures et des écritures de cette transaction, puis relâchant les verrous correspondants.

L'invention concerne plus particulièrement la mise en oeuvre de la fermeture d'une transaction. Le protocole selon l'invention met en oeuvre des verrous en lecture et des verrous en écriture, classiques, dont la définition a été rappellée ci-dessus. Il met en oeuvre en outre un nouveau type de verrou appelé verrou d'intention d'écriture, qui interdit toute écriture concurrente à toute autre transaction, mais qui permet une lecture par d'autres transactions. Autrement dit, un verrou en intention d'écriture peut coexister avec des verrous en lecture. Plusieurs verrous de lecture peuvent coexister, mais un verrou en écriture ne peut coexister avec aucun autre verrou.

Lorsqu'une application lit un registre de la mémoire volatile, sous une transaction, elle doit au préalable acquérir un verrou en lecture, pour ce registre. Si un verrou en écriture a déjà été attribué à une autre transaction pour ce registre, alors la requête en lecture est mise en attente jusqu'à ce que le verrou en écriture ait été relâché. La durée de cette attente est bornée. En cas de dépassement de cette borne, l'attribution d'un verrou en lecture est refusée à l'application. Pour des applications dans le domaine des télécommunications, la durée de cette attente doit être courte et, d'autre part, un refus de requête en lecture doit être très rare pour être tolérable.

Lorsqu'une application veut écrire une nouvelle valeur dans un registre, sous une transaction, elle doit selon l'invention acquérir au préalable un verrou en intention d'écriture, pour ce registre. Si un verrou en intention d'écriture ou un verrou en écriture a déjà été attribué à une autre transaction pour ce registre, alors la requête en écriture est mise en attente jusqu'à ce que ce verrou ait été relâché. La durée de cette attente est bornée. En cas de dépassement de cette borne, l'attribution d'un verrou en écriture est refusée à l'application, et la requête d'écriture est refusée.

Selon l'invention, lorsqu'un verrou d'intention d'écriture a été attribué à une transaction donnée, pour un registre donné, la nouvelle valeur à écrire est stockée dans le journal qui est associé au registre. Tant que cette valeur n'aura pas été transférée dans le registre, les autres transactions peuvent continuer à lire l'ancienne valeur dans ce registre. Seule la transaction détenant le verrou en intention d'écriture, a le droit de lire la nouvelle valeur contenue dans le registre. Cette propriété du verrou en intention d'écriture, est essentielle pour maintenir la propriété de sérialisibilité des transactions, tout en évitant de faire attendre les applications lectrices.

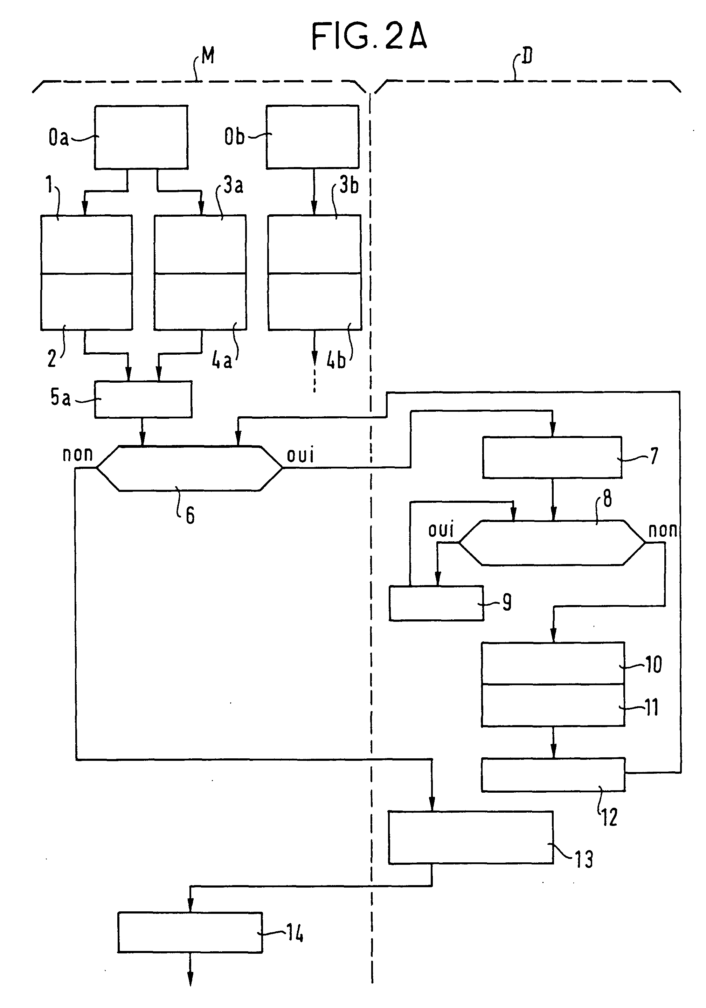

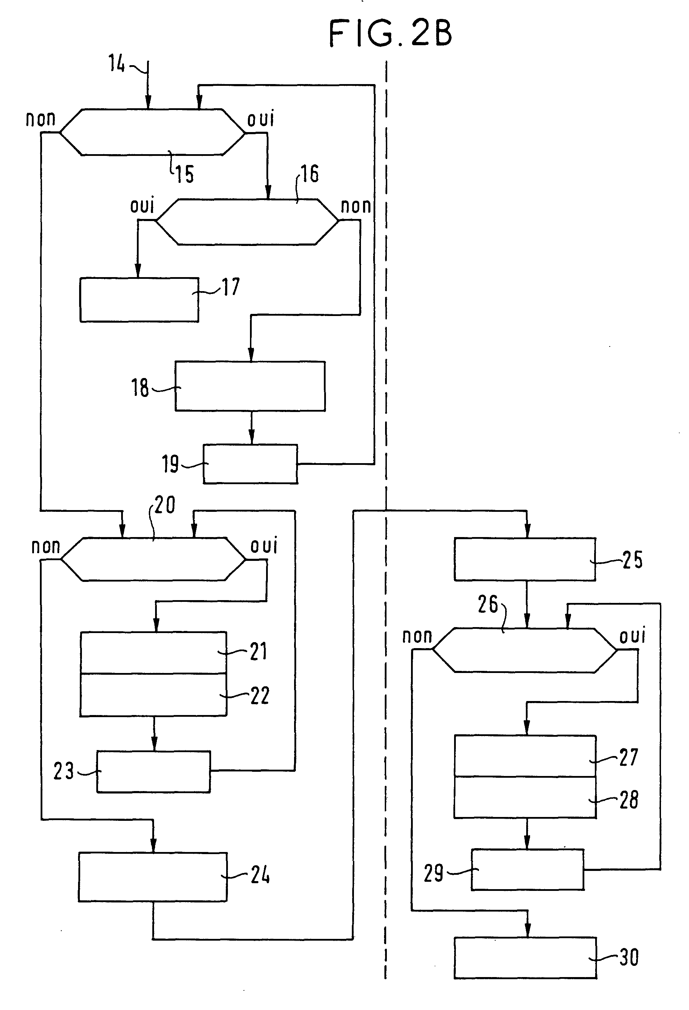

Les figures 2a et 2b représentent un organigramme des opérations réalisées avant et pendant la fermeture d'une transaction donnée a dans un exemple de mise en oeuvre du protocole selon l'invention. La transaction a comporte des écritures et des lectures. Elle est ouverte par une opération 0a. Une transaction b ne comportant que des lectures est ouverte en même temps que la transaction a, par une opération 0b. Cet organigramme ne concerne que la fermeture de la transaction a. La fermeture de la transaction b a lieu indépendamment de la fermeture de la transaction a, et n'est pas représentée.

La moitié gauche des figures 2a, 2b, 3, 4 représente les opérations qui concernent les valeurs mémorisées dans la mémoire volatile M, et la partie droite représente les opérations qui concernent les valeurs mémorisées dans la mémoire non volatile D.

Les écritures de la transaction à fermer, a, doivent inscrire dans les mémoires M et D les nouvelles valeurs de n variables V1, ..., Vn, respectivement. Au début de cet organigramme aucun accès dans la mémoire non volatile D n'a encore été réalisé, et aucun verrou d'écriture, empêchant les applications de lire dans la mémoire volatile M, n'a encore été attribué.

La transaction a accède en écriture dans la mémoire volatile M. Un accès en écriture sur une variable Vi est caractérisé par :
- Une opération 1 attribuant un verrou d'intention d'écriture, à la transaction a, pour le registre Rim dans lesquel cette transaction doit inscrire la nouvelle valeur de la variable Vi dans la mémoire volatile M.
- Une opération 2 écrivant la nouvelle valeur dans le journal Lim associé au registre Rim dans la mémoire volatile M.

Le verrou d'intention d'écriture laisse par ailleurs, la possibilité de lire encore l'ancienne valeur du registre Rim pour satisfaire les applications demandant des lectures. Diverses transactions peuvent donc lire, dans la mémoire volatile M, l'ancienne valeur de chaque variable concernée par la transaction a. Par exemple, la transaction b réalise les opérations suivantes pour accéder en lecture, dans la mémoire volatile M, à une variable Vi en cours de modification par la transaction a:
- Une opération 3b d'acquisition de verrous de lecture sur le registre Rim contenant l'ancienne valeur du registre (avant prise en compte de la modification de a).
- Une opération 4b lisant cette valeur dans le registre Rim.

De manière analogue, la transaction a peut accèder, en lecture, à cette variable Vi par :
- Une opération 3a d'acquisition de verrous de lecture sur le registre Rim contenant l'ancienne valeur du registre (avant prise en compte de la modification de a).
- Une opération 4a lisant cette valeur dans le registre Rim.

La phase de fermeture de la transaction a comporte les opérations suivantes :
- La réception 5a de la requête de fermeture de cette transaction, qui est émise par une application;
- un test 6 réalisé dans la mémoire volatile M sur le contenu des registres de verrous V1m, ..., Vnm correspondant aux registres R1m, ..., Rnm, pour déterminer un premier verrou d'intention d'écriture attribué à la transaction à fermer, et déterminer le premier registre Rim sur lesquel porte un tel verrou ;
- si le test 6 trouve un verrou d'intention d'écriture :
   -- une opération 7 détermine le registre Rid correspondant au registre Rim déterminé par le test 6 ;
   -- puis un test 8 est réalisé sur le contenu du registre de verrous Vid pour déterminer s'il contient un verrou d'écriture attribué à une transaction autre que celle à fermer, pour ce registre Rid ; si c'est le cas, la requête en écriture, émise par la transaction à fermer, est mise en attente par une opération 9, jusqu'à ce que ce verrou soit relâché ;
   -- si ce n'est pas le cas, une opération 10 attribue un verrou d'écriture à la transaction à fermer, pour le registre Rid, ce verrou étant inscrit dans le registre Vid;
   -- puis une opération 11 écrit la nouvelle valeur de la variable Vi dans le journal Lid;
   -- puis une opération 12 mémorise que ce registre Rid a été traité, et les opérations 6 à 12 sont réitérées jusqu'à épuisement des verrous d'intention d'écriture trouvés dans les registres de verrous Vim par le test 6;
- si les verrous d'intention d'écriture trouvés par le test 6 sont épuisés, une opération 13 écrit dans la table T, dans la mémoire non volatile D : l'identité de la transaction à fermer et un indicateur d'issue indiquant "issue inconnue"; et cet indicateur subsistera tant que le contenu de tous les journaux L1d, ..., Lnd n'aura pas été entièrement transféré respectivement dans les registres R1d, ..., Rnd, c'est-à-dire tant que la transaction ne peut être considérée comme effectivement achevée;
- puis une opération 14, dans la mémoire volatile M, relâche tous les verrous de lecture qui ont été attribués à la transaction à fermer, pour des registres R1m, ..., R1n de la mémoire volatile M, afin de permettre ensuite une écriture des nouvelles valeurs dans ces registres.

La figure 2b représente les opérations qui suivent l'opération 14 de relâchement des verrous de lecture possédés par la transaction à fermer :
- Un test 15 est réalisé sur le contenu des registres de verrous Vim pour déterminer s'ils contiennent au moins un verrou d'intention d'écriture attribué à la transaction à fermer, et déterminer le premier registre Rim sur lequel porte un tel verrou ; si ce test 15 ne trouve aucun verrou d'intention d'écriture, un test 20 décrit plus loin est réalisé ;
- si le test 15 trouve un premier verrou d'intention d'écriture, un test 16 vérifie, après un délai fixé, qu'il ne subsiste aucun verrou en lecture, attribué à une transaction quelconque, sur le registre Rim considéré :
   -- S'il subsiste au moins un verrou en lecture après la fin du délai fixé, cette phase de fermeture se termine par une procédure 17 d'avortement de la transaction, procédure qui sera décrite plus loin;
   -- si aucun verrou en lecture ne subsiste, une opération 18 transforme le verrou d'intention d'écriture en verrou d'écriture, qui interdit désormais toute lecture dans le registre Rim considéré; puis une opération 19 mémorise que ce registre Rim a été traité, et les opérations 15, 16, 17, 18, sont réitérées jusqu'à épuisement des verrous d'intention d'écriture trouvés par l'opération 15.

Le test 20 consiste à déterminer si les registres de verrous Vim contiennent au moins un verrou d'écriture attribué à la transaction à fermer, et à déterminer le premier registre Rim sur lequel porte un tel verrou ; et si aucun verrou n'est trouvé, une opération 24 décrite plus loin est réalisée;
- si le test 20 trouve au moins un verrou d'écriture, une opération 21 transfère le contenu du journal Lim, dans le registre Rim, correspondant, pour mettre à jour le contenu de ce registre avec la nouvelle valeur;
   -- puis une opération 22 relâche le verrou d'écriture attribué à la transaction à fermer, pour le registre Rim ;
   -- puis une opération 23 mémorise que le registre Rim a été traité, et les opérations 20, 21, 22 sont réitérées jusqu'à épuisement des verrous d'écriture trouvés par l'opération 20;
- Si le test 20 ne trouve plus aucun verrou d'écriture attribué à la transaction à fermer :
   -- une opération 24 émet un message "transaction réputée achevée", à destination de l'application qui a demandé la fermeture de la transaction, cette application pouvant désormais prendre des décisions sur la foi de la complétude de cette transaction, bien que la transaction ne soit pas réellement achevée puisque la mise à jour de la mémoire non volatile D n' est pas encore faite;
   -- puis une opération 25 écrit dans la table T une nouvelle valeur de l'indicateur d'issue associé à l'identité de la transaction à fermer; cette nouvelle valeur indiquant "réputée achevée", elle permet de savoir, après une éventuelle défaillance, que l'application a reçu le message lui signifiant que la transaction est réputée achevée;
   -- puis une opération 26 consiste à déterminer si les registres de verrous Vid contiennent au moins un verrou d'écriture attribué à la transaction à fermer, et déterminer le premier registre Rid sur lesquel porte un tel verrou.
- Si l'opération 26 trouve un verrou d'écriture :
   -- une opération 27 transfère le contenu du journal Lid, dans le registre Rid, de la mémoire non volatile D;
   -- puis une opération 28 relâche le verrou d'écriture associé au registre Rid considéré;
   -- puis une opération 29 mémorise que ce registre Rid a été traité, et les opérations 26, 27, 28 sont réitérées jusqu'à épuisement des verrous d'écriture trouvés par l'opération 26.
- Si l'opération 26 ne trouve plus aucun verrou d'écriture, une opération 30 efface l'identificateur de la transaction à fermer, et l'indicateur associé, dans la table T ; cet effacement signifiant que la mise à jour de la mémoire non volatile D est complètement achevée.

Il est à remarquer que l'opération 25 d' écriture de la valeur "transaction réputée achevée" dans la table T n'est pas une caractéristique indispensable du protocole selon l'invention. Cette inscription sert uniquement à la gestion de la table des transactions dans la mémoire non volatile, où l'identité d'une transaction est effacée de cette table (hors cas d'avortement) lorsque l'ensemble des modifications a été achevé.

Il est à remarquer que ce protocole n'interdit les lectures dans la mémoire volatile M qu'à partir de l'opération 18 de transformation des verrous d'intention d'écriture en verrous d'écriture et jusqu'à l'opération 22 de relâchement des verrous d'écriture, c'est-à-dire pendant une durée très courte puisque la durée d'accès d'une mémoire non volatile est très courte. La durée d'interdiction ne dépend aucunement du temps d'accès à la mémoire non volatile D puisque l'opération 11 d'écriture de nouvelles valeurs dans les journaux Lid, et l'opération 27 de transfert de ces nouvelles valeurs dans les registres Rid n'entraînent aucune interdiction de lecture dans la mémoire volatile M.

Une défaillance de la mémoire volatile M peut survenir à tout instant au cours de la suite d'opérations décrites ci-dessus. En particulier elle peut avoir lieu après l'opération 24 émettant le message "transaction réputée achevée" à destination de l'application, et avant l'opération 27 qui transfère les contenus des journaux Lid dans les registres Rid.

Dans ce qui suit, la description de la procédure de restauration montrera comment la cohérence des données est rétablie : en achevant effectivement la mise à jour dans la mémoire non volatile D, si aucune procédure d'avortement 17 n'a été effectuée avant la défaillance; ou bien en annulant les préparatifs de mise à jour dans la mémoire non volatile D, et en restaurant les anciennes valeurs dans la mémoire volatile M, si une procédure d'avortement 17 a été effectuée partiellement avant la défaillance.

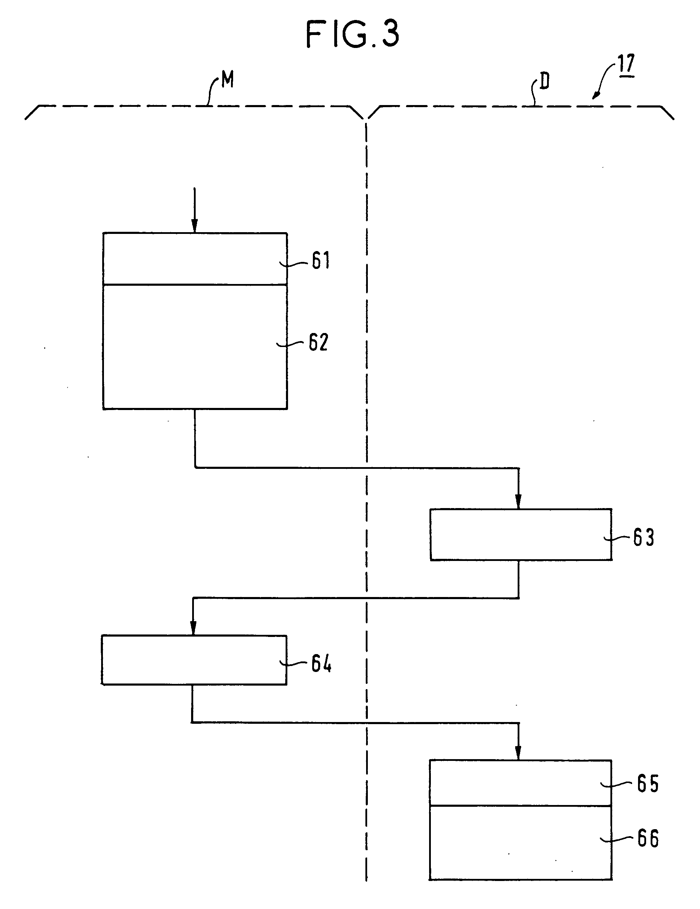

La figure 3 représente un organigramme des opérations de la procédure 17 d'avortement d'une transaction qui était arrivée en phase de fermeture. Cette procédure comporte les opérations suivantes :
- une opération 61 efface le contenu des journaux L1m, ..., Lnm détenus par la transaction avortée, dans la mémoire volatile M;
- une opération 62 relâche les verrous d'écriture et les verrous d'intention d'écriture associés aux registres R1m, ..., Rnm, et détenus par la transaction avortée ;
- puis une opération 63 efface dans la table T, dans la mémoire non volatile D, l'identité de la transaction avortée et l'indicateur associé;
- puis une opération 64 émet un message "transaction avortée" à destination de l'application ayant demandé la fermeture de la transaction;
- puis une opération 65 efface le contenu des journaux L1d, ..., Lnd, détenus par la transaction avortée, dans la mémoire non volatile D;
- et enfin une opération 66 relâche les verrous d'écriture détenus par la transaction avortée, pour les registres Rid, ..., Rnd, dans la mémoire non volatile D, afin d'effacer les préparatifs de mise à jour des n variables qui devaient être modifiées au cours de la transaction avortée.

Il est à remarquer qu'en cas d'avortement d'une transaction, l'application qui a demandé sa fermeture ne reçoit un message "transaction avortée", émis par l'opération 64, qu'après l'effacement 63 de l'identité de transactions dans la mémoire volatile D. Comme il apparaîtra plus loin, l'effacement de l'identité de la transaction interdit la mise à jour de la mémoire non volatile D par la procédure de restauration. Par conséquent, le déroulement ultérieur de l'application sera cohérent avec la situation ultérieure des données dans la mémoire non volatile D.

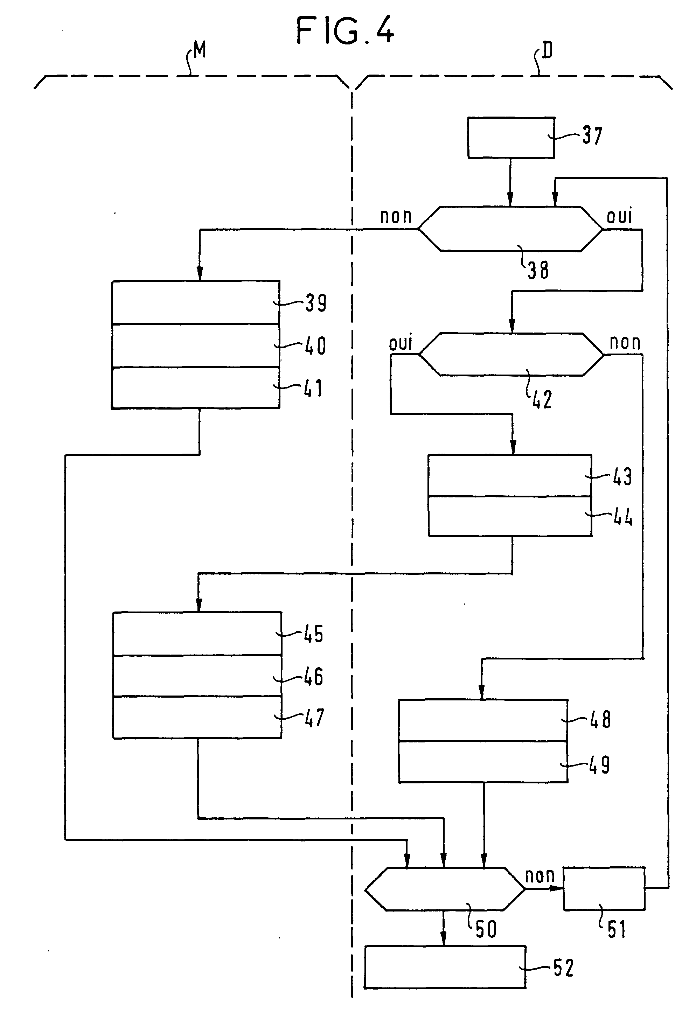

La figure 4 représente un organigramme illustrant un exemple de mise en oeuvre d'une partie du protocole transactionnel selon l'invention, qui est une procédure de restauration du contenu de la mémoire volatile M après une défaillance de celle-ci. Les opérations représentées sur cet organigramme sont réitérées p fois s'il y a p variables dont les valeurs sont sauvegardées sur la mémoire non volatile. Ces opérations sont les suivantes :
- une opération 37 initialise à 1 la valeur d'un indice i;
- puis une opération 38 teste le contenu du registre de verrous Vid dans la mémoire non volatile D :
   -- Si le registre de verrous Vid, ne contient pas de verrous d'écriture, ceci signifie que le contenu du journal Lid a été transféré dans le registre Rid, donc que la mise à jour de la valeur de la variable Vi a été achevée dans la mémoire non volatile D avant la défaillance, et qu'il suffit de restaurer cette nouvelle valeur dans la mémoire volatile M; une opération 39 attribue un verrou d'écriture à la procédure de restauration pour le registre Rim; puis une opération 40 transfert alors le contenu du registre Rid dans le registre Rim, pour réinscrire la nouvelle valeur de la variable dans la mémoire volatile M; puis une opération 41 relâche le verrou d'écriture pour Rim; puis une opération 50, décrite plus loin, est exécutée.
   -- Si le registre de verrous Vid contient un verrou d'écriture, ceci signifie que la mise à jour de cette variable n'a pas encore été faite dans la mémoire non volatile D au moment de la défaillance; alors une opération 42 lit la table T pour déterminer si elle contient encore l'identité de la transaction à laquelle est attribué ce verrou d'écriture :
      --- Si l'identité de cette transaction est présente dans la table T, cela signifie que la mise à jour de la mémoire non volatile D n'a pas été complètement achevée pour la transaction; une opération 43 transfère alors le contenu du journal Lid associé à ce verrou d'écriture, dans le registre Rid associé à ce verrou d'écriture, afin de mettre à jour le contenu de ce registre Rid ; puis une opération 44 relâche le verrou d'écriture qui a été trouvé dans le registre Vid par l'opération 40 ; puis une opération 45 attribue un verrou d'écriture à cette procédure de restauration dans le registre de verrous Vim ; puis une opération 46 transfère le contenu du registre Rid dans le registre Rim situé dans la mémoire volatile M, pour le mettre à jour à son tour ; enfin une opération 47 relâche le verrou d'écriture qui a été attribué par l'opération 45.
      --- Si cette identité de transaction n'est pas présente dans la table T, ceci signifie qu'une procédure d'avortement 17 a été exécutée partiellement avant la défaillance, et qu'il faut donc annuler les préparatifs de mise à jour de la mémoire non volatile D; une opération 48 efface alors le contenu du journal Lid ; puis, une opération 49 relâche le verrou d'écriture trouvé dans le registre de verrou Vid.

Après l'opération 41, ou l'opération 47, ou l'opération 49, l'opération 50 teste la valeur de l'indice i qui permet de distinguer chacune des p variables concernées par des modifications réalisées par la transaction à fermer:
-- si i est inférieur à p, une opération 51 incrémente l'indice i d'une unité, et la procédure est réitérée à partir de l'opération 40;
-- si i est égal à p, la procédure est terminée par une opération 52 d'effacement de toutes les identités de transaction présentes dans la table T, dans la mémoire non volatile D.

Il est à remarquer que si l'opération 42 constate que l'identité de la transaction correspondant au verrou d'écriture trouvé par l'opération 40 est absente de la table T, cela implique nécessairement qu'une décision d'avortement a été prise avant la défaillance, ce qui explique que l'identité ait été effacée. Les contenus des journaux Lid attribués à cette transaction doivent donc être effacés s'ils n'ont pas pu être effacés avant la défaillance. Bien entendu, le contenu de ces journaux ne doit pas être pris en compte puisqu'une décision d'avorter la transaction a été prise.

Si l'opération 42 constate que l'identité de la transaction correspondant au verrou d'écriture trouvé par l'opération 40 est présent dans la table T, et si l'indicateur a la valeur "transaction réputée achevée", cela implique que la décision de fermer la transaction a été prise avant la défaillance. Les contenus des journaux Lid attribués à cette transaction doivent être transférés dans les registres Rid correspondant, dans le cas où ils n'auraient pas pu être transférés avant la défaillance. Ceci permet ensuite de recopier le contenu des registres Rid dans les registres correspondants Rim pour restaurer le contenu de la mémoire volatile M.

Si l'opération 42 constate que l'indicateur de la transaction est présent dans la table T, et si l'indicateur a la valeur "issue inconnue" cela implique que l'application n'a pu recevoir de message "transaction avortée", puisque l'opération 63 d'effacement de l'identité de transaction précède toujours l'opération 64 d'envoi de ce message. Par contre, l'application peut avoir reçu un message "transaction réputée achevée", sans que l'identité de la transaction ait été effacée, ni que l'indicateur ait pris la valeur "transaction réputée achevée", puisque l'opération 10 d'émission du message "transaction réputée achevée" a lieu un certain temps avant l'opération 30 qui efface l'identité de la transaction dans la table T. Il est alors nécessaire de réaliser les opérations achevant effectivement la fermeture de la transaction pour retrouver une cohérence des données dans tous les cas : soit que l'application ait observé un message "transaction réputée achevée", soit qu'elle n'ait observé aucun message. Dans ce dernier cas elle n'a évidemment pris aucune décision incohérente avec l'achevènement de l'effectif de la transaction.

Dans l'exemple de mise en oeuvre décrit ci-dessus, les registres de verrous Vid associés aux registres logiques Rid de la mémoire volatile D sont situés dans la mémoire volatile M, et non dans la mémoire non volatile D. Il est nécessaire de détecter, après une défaillance, l'existence d'un verrou Vid attribué à un registre Rid. (opération 38, sur la figure 4). Le registre Vid étant situé dans la mémoire volatile M, son contenu est perdu lors de chaque défaillance. Mais il y a un autre moyen de déterminer si la mise à jour du registre Rid a été achevée ou non : l'opération 38 consiste alors à détecter si le journal Lid a un contenu. Si le contenu des registres Lid est systématiquement effacé quand il a été transféré dans un registre Rid, la présence d'un contenu dans un journal Lid signifie que le registre Rid n'a pas été mis à jour. En effet il ne peut y avoir plus d'un seul contenu qui ait été inscrit dans ce journal Lid après la défaillance.

Le contenu du registre de verrous Vid peut en outre être restauré dans la mémoire volatile M, en réinscrivant un verrou d'écriture dans ce registre, après avoir détecté la présence d'un contenu dans le journal Lid dans la mémoire non volatile D.

## Revendications

1. Protocole transactionnel portant sur des données mémorisées identiquement dans une mémoire non volatile et dans une mémoire volatile, dans lequel, pendant une transaction comportant une écriture de la nouvelle valeur d'au moins une variable mémorisée dans un premier registre (Rim) de la mémoire volatile (M), et dans un second registre (Rid) de la mémoire non volatile (D) :
un accès en lecture consiste, pour chaque variable (Vi), à :
- attribuer (3a) à cette transaction, pour le premier registre (Rim), un verrou dit de lecture interdisant l'exécution d'une écriture,
- puis lire (4a) la valeur de ce registre;
un accès en écriture consiste, pour chaque variable (Vi), notamment à :
- attribuer (1) à cette transaction, pour le premier registre (Rim), un verrou dit d'intention d'écriture, interdisant une écriture, dans le premier registre (Rim), à toute transaction autre que la transaction à fermer, mais autorisant une lecture;
- associer au premier registre (Rim) un registre appelé premier journal (Lim), et y stocker (2) la nouvelle valeur de la variable;
en ce que la fermeture de ladite transaction consiste essentiellement à :
- (6) pour tout premier registre (Rim) auquel un verrou d'intention d'écriture a été attribué pour la transaction à fermer,
-- déterminer (7) le second registre (Rid) correspondant dans la mémoire non volatile (D) ;
-- attribuer (10) à ce second registre (Rid) ainsi déterminé un verrou d'écriture pour la transaction à fermer, ce verrou interdisant une lecture et une écriture à toute autre transaction ;
-- associer au second registre (Rid) ainsi déterminé un registre (Lid) appelé second journal, et y stocker (11) la nouvelle valeur de la variable ;
**caractérisé en ce que cet accès en écriture consiste ensuite à :**
- écrire (13) dans une table (T) dite des transactions, mémorisée dans la mémoire non volatile (D), l'identité de cette transaction;
- relâcher (14) tout verrou de lecture attribué à la transaction à fermer;
- puis (15), pour tout premier registre (Rim) possédant un verrou d'intention d'écriture, pour la transaction à fermer, vérifier (16) qu'il ne subsiste aucun verrou de lecture attribué à une autre transaction pour ce registre, et s'il subsiste au moins un verrou de lecture pendant une durée supérieure à une borne fixée, exécuter une procédure d'avortement (17) de la transaction à fermer; et sinon transformer (18) ce verrou d'intention d'écriture en verrou d'écriture;
- puis (20), pour tout premier registre (Rim) possédant un verrou d'écriture, pour la transaction à fermer,
-- transférer (21) la nouvelle valeur de la variable, du journal (Lim) au registre (Rim);
-- et relâcher (22) le verrou d'écriture attribué à la transaction à fermer, pour le premier registre (Rim);
- puis émettre (24) un message "transaction réputée achevée", à destination d'une application ayant demandé la fermeture de la transaction;
- puis inscrire (25) dans la table (T) un indicateur associé à l'identité de la transaction et indiquant que celle-ci est réputée achevée;
- puis (26), pour tout second registre (Rid) possédant un verrou d'écriture, pour la transaction à fermer :
-- transférer (27) la nouvelle valeur de la variable, du second journal (Lid) au second registre (Rid);
-- puis relâcher (28) le verrou d'écriture attribué à cette transaction pour le premier registre (Rid);
- et enfin effacer (30) l'identité de la transaction, dans la table (T);
**en ce que la procédure d'avortement (17) de la transaction à fermer, consiste pour tout premier registre (Rim), à :**
- effacer (61) le contenu de chaque premier journal (Lim) stockant la valeur d'une variable modifiée par la transaction avortée;
- puis relâcher (62) les verrous d'intention d'écriture et les verrous d'écriture attribués à la transaction avortée, pour ce premier registre (Rim);
- effacer (63) l'identité de la transaction avortée, dans la table (T);
- puis émettre (64) un message "transaction avortée" vers l'application ayant demandé la fermeture de la transaction;
- puis effacer (65) le contenu de chaque second journal (Lim) stockant la valeur d'une variable modifiée par la transaction avortée;
- puis relâcher (65) les verrous d'écriture attribués à la transaction avortée, pour des seconds registres (Rid);
**et en ce que, pour restaurer le contenu de la mémoire volatile (M) après une défaillance de celle-ci, il consiste notamment à :**
- pour tout second registre (Rid) de la mémoire non volatile, vérifier (38) s'il subsiste un verrou d'écriture sur ce registre, et :
-- s'il ne subsiste aucun verrou d'écriture, attribuer (39) un verrou d'écriture au premier registre (Rim) correspondant au second registre (Rid) considéré, puis transférer (40) le contenu de ce second registre (Rid) dans ce premier registre (Rim) et relâcher (41) ce verrou d'écriture ;
-- s'il subsiste un verrou d'écriture, déterminer (42) si ce verrou appartient à une transaction dont l'identité se trouve dans la table des transactions; et :
--- si oui, transférer (43) le contenu du second journal (Lid) dans le second registre (Rid), puis relâcher (44) le verrou d'écriture, puis attribuer (45) un verrou d'écriture au premier registre (Rim) correspondant au second registre considéré, puis transférer (46) le contenu de ce second registre (Rid) dans ce premier registre (Rim), et relâcher (47) ce dernier verrou d'écriture;
--- sinon, effacer le contenu du second journal (Lid) puis relâcher (49) le verrou d'écriture;
- enfin, effacer (52) toutes les identités de transaction présentes dans la table (T).

2. Protocole selon la revendication 1, **caractérisé en ce que**, dans la procédure de restauration, pour vérifier (38) s'il subsiste un verrou en écriture sur un second registre (Rid), il consiste à déterminer si un second journal (Lid) est associé à ce second registre.

3. Système pour la mise en oeuvre du protocole selon l'une des revendications 1 ou 2, comportant : au moins un processeur (P), une mémoire volatile (M), une mémoire non volatile (D), et des moyens (P) pour réaliser une transaction comportant une écriture de la nouvelle valeur d'au moins une variable mémorisée dans un premier registre (Rim) de la mémoire volatile (M), et dans un second registre (Rid) de la mémoire non volatile (D); dans lequel, les moyens (P) pour réaliser une transaction comportent, pour un accès en écriture, pour chaque variable (Vi) :
- des moyens pour attribuer (1) à cette transaction, pour le premier registre (Rim) correspondant à cette variable, un verrou dit d'intention d'écriture, interdisant une écriture, dans ce premier registre (Rim), à toute transaction autre que la transaction à fermer, mais autorisant une lecture;
- des moyens pour associer au premier registre (Rim) un registre appelé premier journal (Lim), et y stocker (2) la nouvelle valeur de la variable;
et dans lequel les moyens (P) pour réaliser une transaction comportent, pour la fermeture de ladite transaction :
- des moyens pour déterminer (6) chaque premier registre (Rim) auquel un verrou d'intention d'écriture a été attribué pour la transaction à fermer, et à déterminer (7) le second registre (Rid) correspondant dans la mémoire non volatile (D) ;
- des moyens pour attribuer (10) à chacun des seconds registres (Rid) ainsi déterminés un verrou d'écriture pour la transaction à fermer, ce verrou interdisant une écriture à toute autre transaction ;
- des moyens pour associer à chacun des seconds registres (Rid) ainsi déterminés un registre (Lid) appelé second journal, et y stocker (11) la nouvelle valeur de la variable ;
**caractérisé en ce que les moyens pour réaliser une transaction comportent en outre :**
- des moyens pour écrire (13) dans une table (T) dite des transactions, mémorisée dans la mémoire non volatile (D), l'identité de cette transaction;
- des moyens pour relâcher (14) tout verrou de lecture attribué à la transaction à fermer;
- des moyens pour vérifier (15, 16), pour tout premier registre (Rim) possédant un verrou d'intention d'écriture, pour la transaction à fermer, qu'il ne subsiste aucun verrou de lecture attribué à une transaction quelconque sur ce registre, et s'il subsiste au moins un verrou de lecture pendant une durée supérieure à une borne fixée, exécuter une procédure d'avortement (17) de la transaction à fermer; et sinon transformer (18) ce verrou d'intention d'écriture en verrou d'écriture puis (20), pour tout premier registre (Rim) possédant un verrou d'écriture, pour la transaction à fermer,
-- transférer (21) la nouvelle valeur de la variable, du journal (Lim) au registre (Rim);
-- et relâcher (22) le verrou d'écriture attribué à la transaction à fermer pour le registre (Rim);
- des moyens pour émettre (24) un message "transaction réputée achevée", à destination d'une application ayant demandé la fermeture de la transaction;
- des moyens pour inscrire (25) dans la table (T) un indicateur associé à l'identité de la transaction et indiquant que celle-ci est réputée achevée;
- pour tout second registre (Rid) possédant un verrou d'écriture, pour la transaction à fermer, des moyens pour :
-- transférer (27) la nouvelle valeur de la variable, du second journal (Lid) au second registre (Rid);
-- puis relâcher (28) le verrou d'écriture attribué à cette transaction pour le premier registre (Rid);
- et des moyens pour effacer (30) l'identité de la transaction, dans la table (T);
**et en ce que les moyens pour exécuter la procédure d'avortement (17) de la transaction à fermer, comportent :**
- des moyens pour effacer (61) le contenu de chaque premier journal (Lim) stockant la valeur d'une variable modifiée par la transaction avortée;
- des moyens pour relâcher (62) les verrous d'intention d'écriture et les verrous d'écriture attribués à la transaction avortée;
- des moyens pour effacer (63) l'identité de la transaction à fermer, dans la table (T);
- des moyens pour émettre (64) un message "transaction avortée" vers l'application ayant demandé la fermeture de la transaction;
- des moyens pour effacer (65) le contenu de chaque second journal (Lim) stockant la valeur d'une variable modifiée par la transaction avortée;
- des moyens pour relâcher (66) les verrous d'écriture attribués à la transaction avortée, pour des seconds registres (Rid);
**et en ce que ce système comporte en outre des moyens pour restaurer le contenu de la mémoire volatile (M) après une défaillance de celle-ci, ces moyens comportant:**
- des moyens pour vérifier (37, 50, 51), pour tout second registre (Rid) de la mémoire non volatile (D), s'il subsiste un verrou d'écriture sur ce registre, et :
-- s'il ne subsiste aucun verrou d'écriture, attribuer (39) un verrou d'écriture au premier registre (Rim) correspondant au second registre (Rid) considéré, puis transférer (40) le contenu de ce second registre (Rid) dans ce premier registre (Rim) et relâcher (41) ce verrou d'écriture;
-- s'il subsiste un verrou d'écriture, déterminer (42) si ce verrou appartient à une transaction dont l'identité se trouve dans la table des transactions; et :
--- si oui, transférer (43) le contenu du second journal (Lid) dans le second registre (Rid), puis relâcher (44) le verrou d'écriture, puis attribuer (45) un verrou d'écriture au premier registre (Rim) correspondant au second registre considéré, puis transférer (46) le contenu de ce second registre (Rid) dans ce premier registre (Rim), et relâcher (47) ce dernier verrou d'écriture;
--- sinon, effacer (48) le contenu du second journal (Lid) puis relâcher (49) ce verrou d'écriture;
- enfin, effacer (52) toutes les identités de transaction présentes dans la table(T).

## Claims

1. Transactional protocol for data stored identically in a non-volatile memory and in a volatile memory wherein, during a transaction including writing of a new value of at least one variable stored in a first register (Rim) of the volatile memory (M) and in a second register (Rid) of the non-volatile memory (D):
a read operation consists in, for each variable (Vi):
- allocating (3a) a read lock prohibiting writing to said transaction for the first register (Rim);
- then reading (4a) the content of said register;
and a write operation consists in, for each variable (Vi):
- allocating (1) a write intention lock to said transaction for the first register (Rim) prohibiting writing in the first register (Rim) by any transaction other than the transaction to be closed, but allowing reading;
- associating a first log (Lim) register with the first register (Rim) and storing (2) therein the new value of the variable;
and the closure of said transaction essentially consists in:
- (6) for any first register (Rim) to which a write intention lock has been allocated by the transaction to be closed:
-- determining (7) the corresponding second register (Rid) in the non-volatile memory (D);
-- allocating (10) to said second register (Rid) thus determined a write lock for the transaction to be closed prohibiting reading and writing by any other transaction;
-- associating with the second register (Rid) thus determined a second log register (Lid) and storing (11) therein the new value of the variable;
**characterized in that this write operation then consists in:**
- writing (13) the identifier of said transaction into a table (T) of transactions stored in the non-volatile memory (D);
- releasing (14) any read lock allocated to the transaction to be closed;
- then (15), for any first register (Rim) holding a write intention lock, for the transaction to be closed, verifying (16) that there remains no read lock allocated to any other transaction for said register, and, if at least one read lock remains during a time period exceeding a fixed limit, executing a procedure to abort (17) the transaction to be closed; and otherwise converting (18) said write intention lock into a write lock;
- then (20), for any first register (Rim) holding a write lock, for the transaction to be closed:
-- transferring (21) the new value of the variable from the log (Lim) to the register (Rim);
-- and releasing (22) the write lock allocated to the transaction to be closed for the register (Rim);
- then sending (24) a "transaction deemed completed" message to an application that requested closure of the transaction;
- then writing (25) in the table (T) an indicator associated with the identifier of the transaction and indicating that the latter is deemed completed;
- then (26), for any second register (Rid) holding a write lock, for the transaction to be closed:
-- transferring (27) the new value of the variable from the second log (Lid) to the second register (Rid);
-- then releasing (28) the write lock allocated to the transaction for the first register (Rid);
- and finally clearing (30) the identifier of the transaction in the table (T);
**and in that the procedure for aborting (17) the transaction to be closed consists in, for any first register (Rim):**
- clearing (61) the content of each first log (Lim) holding the value of a variable modified by the aborted transaction;
- then releasing (62) write intention locks and write locks allocated to the aborted transaction, for said first register (Rim);
- clearing (63) the identifier of the aborted transaction in the table (T);
- then sending (64) a "transaction aborted" message to the application that requested closure of the transaction;
- then clearing (65) the content of each second log (Lim) storing the value of a variable modified by the aborted transaction;
- then releasing (65) write locks allocated to the aborted transaction for second registers (Rid);
**and in that the procedure for restoring the content of the volatile memory (M) after failure thereof consists in:**
- for any second register (Rid) of the non-volatile memory, verifying (38) if any write lock remains in said register, and:
-- if no write lock remains therein, allocating (39) a write lock to the first register (Rim) corresponding to the second register (Rid), then transferring (40) the content of the second register (Rid) into said first register (Rim) and releasing (41) said write lock;
-- if a write lock remains therein, determining (42) if said lock belongs to a transaction the identifier of which is in the table of transactions; and:
--- if yes, transferring (43) the content of the second log (Lid) into the second register (Rid), then releasing (44) the write lock, then allocating (45) a write lock to the first register (Rim) corresponding to the second register, then transferring (46) the content of said second register (Rid) into said first register (Rim), and releasing (47) said write lock;
--- if no, clearing the content of the second log (Lid) and then releasing (49) the write lock;
- finally, clearing (52) all transaction identifiers in the table (T).

2. Protocol according to claim 2 **characterized in that**, in the restore procedure, the procedure to verify (38) if any write lock remains in a second register (Rid) consists in determining if a second log (Lid) is associated with said second register.

3. System for implementing the protocol according to one of claims 1 and 2 including: at least one processor (P), a volatile memory, a non-volatile memory (D) and means (P) for executing a transaction including writing a new value of at least one variable stored in a first register (Rim) of the volatile memory (M) and in the second register (Rid) of the non-volatile memory (D); wherein the means (P) for executing a transaction include, for a write operation, for each variable (Vi):
- means for allocating (1) a write intention lock to said transaction for the first register (Rim) corresponding to said variable preventing writing in said first register (Rim) by any transaction other than the transaction to be closed, but allowing reading;
- means for associating a first log (Lim) register with the first register (Rim) and storing (2) therein the new value of the variable;
and the means (P) for executing a transaction include, for the closure of said transaction:
- means for determining (6) each first register (Rim) to which a write intention lock has been allocated for the transaction to be closed and for determining (7) the corresponding second register (Rid) in the non-volatile memory (D);
- means for allocating (10) to each of the second registers (Rid) thus determined a write lock for the transaction to be closed, prohibiting writing by any other transaction;
- means for associating with each of the second registers (Rid) thus determined a second log register (Lid) and storing (11) therein the new value of the variable;
**characterized in that the means for carrying out a transaction further include:**
- means for writing (13) the identifier of said transaction in a table (T) of transactions stored in the non-volatile memory (D);
- means for releasing (14) any read lock allocated to the transaction to be closed;
- for any first register (Rim) holding a write intention lock, for the transaction to be closed, means for verifying (15, 16) that there remains in said register no read lock allocated to any transaction and, if at least one read lock remains for a time period greater than a fixed limit, executing a procedure to abort (17) the transaction to be closed; and otherwise converting (18) said write intention lock into a write lock and then (20), for any first register (Rim) holding a write lock, for the transaction to be closed:
-- transferring (21) the new value of the variable from the log (Lim) to the register (Rim);
-- and releasing (22) the write lock allocated to the transaction to be closed for the register (Rim);
- means for sending (24) a "transaction deemed complete" message to an application that requested closure of the transaction;
- means for writing (25) in the table (T) an indicator associated with the identifier of the transaction and indicating that it is deemed completed;
- for any second register (Rid) holding a write lock, for the transaction to be closed, means for:
-- transferring (27) the new value of the variable from the second log (Lid) to the second register (Rid);
-- then releasing (28) the write lock allocated to said transaction for the first register (Rid);
- and means for clearing (30) the identifier of the transaction in the table (T);
**and in that the means for executing the procedure for aborting (17) the transaction to be closed include:**
-- means for clearing (61) the content of each first log (Lim) holding the value of a variable modified by the aborted transaction;
-- means for releasing (62) write intention locks and write locks allocated to the aborted transaction;
-- means for clearing (63) the identifier of the transaction to be closed in the table (T);
-- means for sending (64) a "transaction aborted" message to the application that requested closure of the transaction;
-- means for clearing (65) the content of each second log (Lim) storing the value of a variable modified by the aborted transaction;
-- means for releasing (66) the write locks allocated to the aborted transaction for second registers (Rid);
**and in that said system further includes means for restoring the content of the volatile memory (M) after failure thereof, said means including:**
- means for verifying (37, 50, 51), for each second register (Rid) of the non-volatile memory (D), whether a write lock remains in said register, and:
-- if no write lock remains therein, allocating (39) a write lock to the first register (Rim) corresponding to the second register (Rid), then transferring (40) the content of said second register (Rid) into said first register (Rim) and releasing (41) said write lock;
-- if any write lock remains therein, determining (42) if said lock belongs to a transaction the identifier of which is in the table of transactions; and:
--- if yes, transferring (43) the content of the second log (Lid) into the second register (Rid), then releasing (44) the write lock, then allocating (45) a write lock to the first register (Rim) corresponding to the second register, then transferring (46) the content of said second register (Rid) into said first register (Rim), and releasing (47) said write lock;
--- if no, clearing (48) the content of the second log (Lid) then releasing (49) said write lock;
- finally, clearing (52) all transaction identifiers in the table (T).

## Patentansprüche

1. Transaktionsprotokoll, das Daten betrifft, die identisch in einem nichtflüchtigen Speicher und in einem flüchtigen Speicher gespeichert sind, bei welchem während einer Transaktion, die ein Schreiben des neuen Wertes wenigstens einer in einem ersten Register (Rim) des flüchtigen Speichers (M) und in einem zweiten Register (Rid) des nichtflüchtigen Speichers (D) gespeicherten Variablen umfasst:
ein Lesezugriff für jede Variable (Vi) darin besteht:
- dieser Transaktion für das erste Register (Rim) eine Sperre, Lesesperre genannt, zuzuweisen, die die Durchführung eines Schreibens verbietet,
- dann den Wert dieses Registers zu lesen (4a);
ein Schreibzugriff für jede Variable (Vi) insbesondere darin besteht:
- dieser Transaktion für das erste Register (Rim) eine Sperre, Schreibsperre genannt, zuzuweisen, die im ersten Register (Rim) für jede andere Transaktion als die abzuschließende Transaktion ein Schreiben verbietet, aber ein Lesen zulässt;
- mit dem ersten Register (Rim) ein Register, das erstes Journal (Lim) genannt wird, zu verbinden und dort den neuen Wert der Variablen zu speichern (2);
dadurch, dass der Abschluss der Transaktion im Wesentlichen darin besteht:
- (6) für jedes erste Register (Rim), dem für die abzuschließende Transaktion eine Sperre für die Schreibabsicht zuaewiesen wurde,
-- das entsprechende zweite Register (Rid) im nichtflüchtigen Speicher (D) zu bestimmen;
-- diesem so bestimmten zweiten Register (Rid) für die abzuschließende Transaktion eine Schreibsperre zuzuweisen, wobei diese Sperre jeder anderen Transaktion ein Lesen und ein Schreiben verbietet;
-- mit dem so bestimmten zweiten Register (Rid) ein Register (Lid), das zweites Journal genannt wird, zu verbinden und dort den neuen Wert der Variablen zu speichern (11);
**dadurch gekennzeichnet, dass** dieser Schreibzugriff dann darin besteht:
- in eine Tabelle (T), Tabelle der Transaktionen genannt, die im nichtflüchtigen Speicher (D) gespeichert ist, die Identität dieser Transaktion zu schreiben (13);
- jede der abzuschließenden Transaktion zugewiesene Lesesperre aufzuheben (14);
- dann (15) für jedes erste Register (Rim), das für die abzuschließende Transaktion eine Sperre für die Schreibabsicht besitzt, zu prüfen (16), ob keine einer Transaktion für dieses Register zugewiesene Lesesperre weiterbesteht, und wenn während einer Dauer, die größer als eine festgelegte Grenze ist, wenigstens eine Lesesperre weiterbesteht, eine Fehlschlagprezedur (17) für die abzuschließende Transaktion durchzuführen; und wenn nicht, diese Sperre für die Schreibabsicht in eine Schreibsperre umzuwandeln (18);
- dann (20) für jedes erste Register (Rim), das für die abzuschließende Transaktion eine Schreibsperre besitzt,
-- den neuen Wert der Variablen vom Journal (Lim) zum Register (Rim) zu überführen (21);
-- und für das erste Register (Rim), die der abzuschließenden Transaktion zugewiesene Schreibsperre aufzuheben (22);
- dann eine Nachricht "Transaktion als beendet angesehen" zu einer Anwendung zu senden (24), die den Abschluss der Transaktion angefordert hat;
- dann in die Tabelle (T) einen Indikator einzutragen (25), der der Identität der Transaktion zugewiesen wird und angibt, das diese als beendet angesehen wird;
- dann (26) für jedes zweite Ragister (Rid), das für die abzuschließende Transaktion eine Schreibsperre besitzt,
-- den neuen Wert der Variablen vom zweiten Journal (Lid) zum zweiten Register (Rid) zu überführen (27);
-- dann für das erste Register (Rid), die dieser Transaktion zugewiesene Schreibsperre aufzuheben (28);
- und schließlich die Identität der Transaktion in der Tabelle (T) zu löschen (30);
dadurch, **dass** hier die Fehlschlagprozedur (17) für die abzuschließende Transaktion für jedes erste Register (Rim) darin besteht:
- den Inhalt jedes ersten Journals (Lim) zu löschen (61), das den durch die fehlgeschlagene Transaktion modifizierten Wert einer Variablen speichert;
- dann für dieses erste Register (Rim), die der fehlgeschlagenen Transaktion zugewiesenen Sperren für die Schreibabsicht und die Schreibsperren auf zuheben (62);
- die Identität der fehlgeschlagenen Transaktion in der Tabelle (T) zu löschen (63);
- dann eine Nachricht "Transaktion fehlgeschlagen" zu der Anwendung zu senden (64), die den Abschluss der Transaktion angefordert hat;
- dann den Inhalt jedes zweiten Journals (Lim) zu löschen (65), das den durch die fehlgeschlagene Transaktion modifizierten Wert einer Variablen speichert;
- dann für zweite Register (Rid) die der fehlgeschlagenen Transaktion zugewiesenen Schreibsperren aufzuheben (65);
und dadurch, **dass** sie zur Wiederherstellung des Inhalts des flüchtigen Speichers (M) nach einem Ausfall dieses darin besteht:
- für alle zweiten Register (Rid) des nichtflüchtigen Speichers zu prüfen (38), ob eine Schreibsperre auf diesem Register weiterbesteht, und
-- wenn keine Schreibsperre weiterbesteht, dem ersten Register (Rim), das dem betrachteten zweiten Register (Rid) entspricht, eine Schreibsperre zuzuweisen (39), dann den Inhalt dieses zweiten Registers (Rid) in dieses erste Register (Rim) zu überführen (40) und diese Schreibsperre aufzuheben (41);
-- wenn eine Schreibsperre weiterbesteht, zu bestimmen (42) ob diese Schreibsperre zu einer Transaktion gehört, deren Identität sich in der Tabelle der Transaktionen befinde; und
--- wenn ja, den Inhalt des zweiten Journals (Lid) in das zweite Register (Rid) zu überführen (43), dann die Schreibsperre aufzuheben (44), dann dem ersten Register (Rim), das dem betrachteten zweiten Register entspricht, eine Schreibsperre zuzuweisen (45), dann den Inhalt dieses zweiten Registers (Rid) in dieses erste Register (Rim) zu überführen (46) und diese letztere Schreibsperre aufzuheben (47);
--- wenn nicht, den Inhalt des zweiten Journals (Lid) zu löschen, dann die Schreibsperre aufzuheben (49);
- schließlich alle in der Tabelle (T) vorhandenen Transaktionsidentitäten zu löschen (52).

2. Protokoll nach Anspruch 1, **dadurch gekennzeichnet, dass** in der Wiederherstellungsprozedur zum prüfen (38), ob auf einem zweiten Register (Rid) eine Schreibsperre weiterbesteht, sie darin besteht zu bestimmen, ob mit diesem zweiten Register ein zweites Journal (Lid) verbunden ist.

3. System zur Durchführung des Protokolls nach einem der Ansprüche 1 oder 2, welches umfasst: wenigstens einen Prozessor (P), einen flüchtigen Speicher (M), einen nichtflüchtigen Speicher (D) und Mittel (P) zum Durchführen einer Transaktion, die ein Schreiben des neuen Wertes wenigstens einer in einem ersten Register (Rim) des flüchtigen Speichers (M) und in einem zweiten Register (Rid) des nichtflüchtigen Speichers (D) gespeicherten Variablen umfasst; bei welchem die Mittel (P) zum Durchführen einer Transaktion für einen Schreibzugriff für jede Variable (Vi) umfassen:
- Mittel, um dieser Transaktion für das erste Register (Rim), das dieser Variablen entspricht, eine Sperre, Schreibsperre genannt, zuzuweisen (1), die in diesem ersten Register (Rim) für jede andere Transaktion als die abzuschließende Transaktion ein Schreiben verbietet, aber ein Lesen zulässt;
- Mittel, um mit dem ersten Register (Rim) ein Register, das erstes Journal (Lim) genannt wird, zu verbinden und dort den neuen Wert der Variablen zu speichern (2);
und bei welchem die Mittel (P) zum Durchführen einer Transaktion für den Abschluss der Transaktion umfassen:
- Mittel, um jedes erste Register (Rim) zu bestimmen (6), dem für die abzuschließende Transaktion eine Sperre für die Schreibabsicht zugewiesen wurde, und das entsprechende zweite Register (Rid) im nichtflüchtigen Speicher (D) zu bestimmen (7);
- Mittel, um jedem der so bestimmten zweiten Register (Rid) für die abzuschließende Transaktion eine Schreibsperre zuzuweisen (10), wobei diese Sperre jeder anderen Transaktion ein Schreiben verbietet;
- Mittel, um mit jedem der so bestimmten zweiten Register (Rid) ein Register (Lid), das zweites Journal genannt wird, zu verbinden und dort den neuen Wert der Variablen zu speichern (11);
**dadurch gekennzeichnet, dass** die Mittel zum Durchführen einer Transaktion außerdem umfassen:
- Mittel, um in eine Tabelle (T), Tabelle der Transaktionen genannt, die im nichtflüchtigen Speicher (D) gespeichert ist, die Identität dieser Transaktion zu schreiben (13);
- Mittel, um jede der abzuschließenden Transaktion zugewiesene Lesesperre aufzuheben (14);
- Mittel, um für jedes erste Register (Rim), das für die abzuschließende Transaktion eine Sperre für die Schreibabsicht besitzt, zu prüfen (15, 16), ob keine irgendeiner Transaktion auf diesem Register zugewiesene Lesesperre weiterbesteht, und wenn während einer Dauer, die größer als eine festgelegte Grenze ist, wenigstens eine Lesesperre weiterbesteht, eine Fehlschlagprozedur (17) für die abzuschließende Transaktion durchzuführen; und wenn nicht, diese Sperre für die Schreibabsicht in eine Schreibsperre umzuwandeln (18), dann (20) für jedes erste Register (Rim), das für die abzuschließende Transaktion eine Schreibsperre besitzt,
-- den neuen Wert der Variablen vom Journal (Lim) zum Register (Rim) zu überführen (21);
-- und für das Register (Rim) die der abzuschließenden Transaktion zugewiesene Schreibsperre aufzuheben (22);
- Mittel, um eine Nachricht "Transaktion als beendet angesehen" zu einer Anwendung zu senden (24), die den Abschluss der Transaktion angefordert hat;
- Mittel, um in die Tabelle (T) einen Indikator einzutragen (25), der der Identität der Transaktion zugewiesen wird und angibt, das diese als beendet angesehen wird;
- für jedes zweite Register (Rid), das für die abzuschließende Transaktion eine Schreibsperre besitzt, Mittel, um:
-- den neuen Wert der Variablen vom zweiten Journal (Lid) zum zweiten Register (Rid) zu überführen (27);
-- dann für das erste Register (Rid), die dieser Transaktion zugewiesene Schreibsperre aufzuheben (28);
- und Mittel, um die Identität der Transaktion in der Tabelle (T) zu löschen (30);
und dadurch, **dass** die Mittel zum Durchführen der Fehlschlagprozedur (17) für die abzuschließende Transaktion umfassen:
- Mittel, um den Inhalt jedes ersten Journals (Lim) zu löschen (61), das den durch die fehlgeschlagene Transaktion modifizierten Wert einer Variablen speichert;
- Mittel, um die der fehlgeschlagenen Transaktion zugewiesenen Sperren für die Schreibabsicht und die Schreibsperren aufzuheben (62);
- Mittel, um die Identität der abzuschließenden Transaktion in der Tabelle (T) zu löschen (63);
- Mittel, um eine Nachricht "Transaktion fehlgeschlagen" zu der Anwendung zu senden (64), die den Abschluss der Transaktion angefordert hat;
- Mittel, um den Inhalt jedes zweiten Journals (Lim) zu löschen (65), das den durch die fehlgeschlagene Transaktion modifizierten Wert einer Variablen speichert;
- Mittel, um für zweite Register (Rid) die der fehlgeschlagenen Transaktion zugewiesenen Schreibsperren aufzuheben (66); und dadurch, **dass** das System außerdem Mittel zur Wiederherstellung des Inhalts des flüchtigen Speichers (M) nach einem Ausfall dieses umfasst, wobie diese MitCel umfassen:
- Mittel, um für jedes zweite Register (Rid) des nichtflüchtigen Speichers zu prüfen (37, 50, 51), ob eine Schreibsperre auf diesem Register weiterbesteht, und:
-- wenn keine Schreibsperre weiterbesteht, dem ersten Register (Rim), das dem betrachteten zweiten Register (Rid) entspricht, eine Schreibsperre zuzuweisen (39), dann den Inhalt dieses zweiten Registers (Rid) in dieses erste Register (Rim) zu überführen (40) und diese Schreibsperre aufzuheben (41);
-- wenn eine Schreibsperre weiterbesteht, zu bestimmen (42) ob diese Schreibsperre zu einer Transaktion gehört, deren Identität sich in der Tabelle der Transaktionen befindet; und
--- wenn ja, den Inhalt des zweiten Journals (Lid) in das zweite Register (Rid) zu überführen (43), dann die Schreibsperre aufzuheben (44), dann dem ersten Register (Rim), das dem betrachteten zweiten Register entspricht, eine Schreibsperre zuzuweisen (45), dann den Inhalt dieses zweiten Registers (Rid) in dieses erste Register (Rim) zu überführen (46) und diese letztere Schreibsperre aufzuheben (47);
--- wenn nicht, den Inhalt des zweiten Journals (Lid) zu löschen (48), dann diese Schreibsperre aufzuheben (49);
- schließlich alle in der Tabelle (T) vorhandenen Transaktionsidentitäten zu löschen (52).
